# EUROPEAN PATENT SPECIFICATION

(11) **EP 0 429 233 B1**
(45) Date of publication and mention of the grant of the patent: **01.05.1996**
(21) Application number: 90312355.2
(22) Date of filing: 13.11.1990
(51) Int. Cl.: G10L 5/06, G10L 3/00

(54) **Speech recognition system having speech registration function based on twice utterance of word**
Spracherkennungssystem mit Spracheintragungsfunktion, die auf zwei Äusserungen von jedem Wort basiert ist
Système de reconnaissance de la parole comprenant une fonction d'enregistrement de la parole basée sur une double prononciation de chaque mot

(30) Priority: 13.11.1989 JP 295801/89
(43) Date of publication of application: 29.05.1991
(73) Proprietor: NEC CORPORATION, Tokyo (JP)
(72) Inventor: Shimada, Keiko, c/o NEC Corporation, Minato-ku, Tokyo (JP)
(74) Representative: Jackson, David Spence

(56) References cited:
- EP-A- 0 025 685
- EP-A- 0 135 046
- EP-A- 0 328 064
- US-A- 4 672 668
- JOURNAL OF THE ACOUSTICAL SOCIETY OF AMERICA, vol. 68, no. 5, November 1988, pages 1271-1276, New York, US; L.R. RABINER et al.: "A simplified, robust training procedure for speaker trained, isolated word recognition systems"

## Description

The present invention relates to a speech recognition system having a reference pattern memory for storing a plurality of reference speech patterns, and, in particular, to the storing of spoken words in the reference pattern memory.

A known speech recognition system has an input device responsive to speech uttered as a speech input for converting the speech input into an electrical signal as an input speech signal representative of the speech input. A pattern analyzer receives the speech input signal and analyzes the input speech pattern representative of the speech input. An input memory receives and stores the input speech pattern signal as a memorized pattern. A pattern comparator compares the memorized pattern with each one of the reference speech patterns in the reference memory and produces pattern dissimilarities between the memorized pattern and the reference speech patterns. A speech deciding circuit receives and compares the pattern dissimilarities with one another and determines which one of the pattern dissimilarities is the smallest, in order to recognize the speech input.

For registration of a spoken word in the reference pattern memory as one of the reference patterns, the pattern analyzer is switched over from the input memory to the reference pattern memory. Then the word is uttered and the speech is converted into the input speech signal at the input device. The pattern analyzer analyzes the input speech signal and produces the input speech pattern. The input speech pattern is supplied to and stored in the reference pattern memory as a reference pattern.

Since the registration of a spoken word is carried out with only one utterance of the word, undesired sound or noise is also registered together with the speech if it occurs at the utterance of the word. As a result, an erroneous speech pattern is unfortunately registered. This makes recognition of the word incomplete.

EP-A-0 135 046 describes a pattern storing arrangement for use in a speech recognition system. In use, at least three speech inputs are supplied in succession to a microphone. Each speech input is an utterance of a single word or a single succession of several words. The at least three speech inputs are intended to be identical to each other. The microphone, in response to a speech input, supplies an electrical signal to an analyzer that produces in response a speech pattern. The speech pattern consists of a sequence of feature vectors. Each vector has sixteen components. The sequence is made up of the succession of vectors produced one after the other at a frame period of about 20 milliseconds throughout the duration of the electrical signal. The at least three speech patterns are stored temporarily in a voice pattern memory. A similarity measure calculator calculates a similarity measure for each pair that can be selected from the at least three speech patterns. The similarity measure may be a distance representative of the dissimilarities of the two patterns concerned. A dynamic programming algorithm may be used. If the at least three speech patterns are identical, the calculated distances will each be zero. Assuming that in practices the distances are not all zero, a sum of the distances of each speech in turn from the others is calculated, so that there are at least three such sums. For example, if the distances between a first speech pattern, A1, and another three A2, A3 and A4, are respective D12, D13 and D14, then the sum for A1 is D1=D12+D13+D14. The four sums D1,D2,D3 and D4 are stored and a selector incorporating a comparator compares these sums, selects the smallest, and produces a signal indicative of the speech pattern having the smallest sum. A pattern storing unit responds to this signal by storing the indicated speech pattern as a reference pattern.

According to one aspect of the present invention there is provided a method of registering a spoken word in a reference pattern memory of a speech recognition system, comprising steps of;
producing a first speech signal for the word;
analyzing said first speech signal to produce a first speech pattern representative of a pattern of said first speech signal;
holding said first speech pattern as a first held pattern;
producing a second speech signal for the same word;
analyzing said second speech signal to produce a second speech pattern representative of a pattern of said second speech signal;
holding said second speech pattern as a second held pattern;
comparing said first and said second held patterns to produce a pattern dissimilarity between said first and said second patterns;
comparing said dissimilarity with a predetermined maximum dissimilarity and (a) storing one of said first and said second speech patterns as a reference speech pattern in said reference pattern memory when said dissimilarity is smaller than said predetermined maximum dissimilarity and
indicating completion of the operation for registration of the spoken word when said dissimilarity is smaller than said predetermined maximum dissimilarity; or
(B) indicating retry of the operation for registration of the spoken same word when said dissimilarity is larger than said predetermined maximum dissimilarity.

According to another aspect of the present invention there is provided a speech recognition system having means for registering a spoken word in a reference pattern memory means as a reference speech pattern during a registration mode, which comprises;
input means responsive to a speech input for producing an input speech signal representative of said speech input, the input means producing a first and a second speech signal representative of a first spoken word and a second spoken word, respectively, which are repeated attempts to utter the same word during the registration mode;
analyzing means coupled to said input means and responsive to each input speech signal for analyzing the input speech signal to produce an input speech pattern representative of a pattern of the input speech signal, the analyzing means being responsive to said first and second speech signals and analyzing said first and second speech signals to produce first and second speech patterns representative of said first and second speech signals, respectively;
switch means coupled to said analyzing means for connecting the analyzing means to a selected one of an input memory means and said reference pattern memory means, the reference pattern memory means being selectively connected to the analyzing means for storing, as a first memorized pattern, one of said first and said second speech patterns which is applied from the analyzing means through the switch means during the registration mode, and the input memory means being selectively connected to said analyzing means for storing, as a second memorized pattern, another of said first and said second speech patterns which is applied from the analyzing means through the switch means during the registration mode;
comparing means coupled to the reference memory means and the input memory means for comparing said first and second memorized patterns with each other to produce a pattern dissimilarity representing dissimilarity between said first and second memorized patterns;
registration deciding means coupled to the comparing means for and adapted to compare said pattern dissimilarity with a predetermined maximum dissimilarity and to produce a registration signal for causing storing of one of said first and said second memorized patterns as a reference speech pattern in the reference pattern memory means when said pattern dissimilarity is smaller than said predetermined maximum dissimilarity, said registration deciding means producing a retry signal when said pattern dissimilarity is larger than said predetermined maximum dissimilarity; and
retry indicating means responsive to the retry signal for indicating retry of the operation for registration of the spoken word.

The invention will now be described by way of example with reference to the accompanying drawings, in which:
Fig. 1 is a schematic block diagram view of a speech recognition system according to one embodiment of the present invention;
Fig. 1a is a view illustrating an example of the reference pattern memory used in the system of Fig. 1;
Fig. 2 is a schematic block diagram view of a pattern analyzer used in the system of Fig. 1; and
Fig. 3 is a flow chart illustrating operation of a registration deciding circuit used in Fig. 1.

### Description of Preferred Embodiments

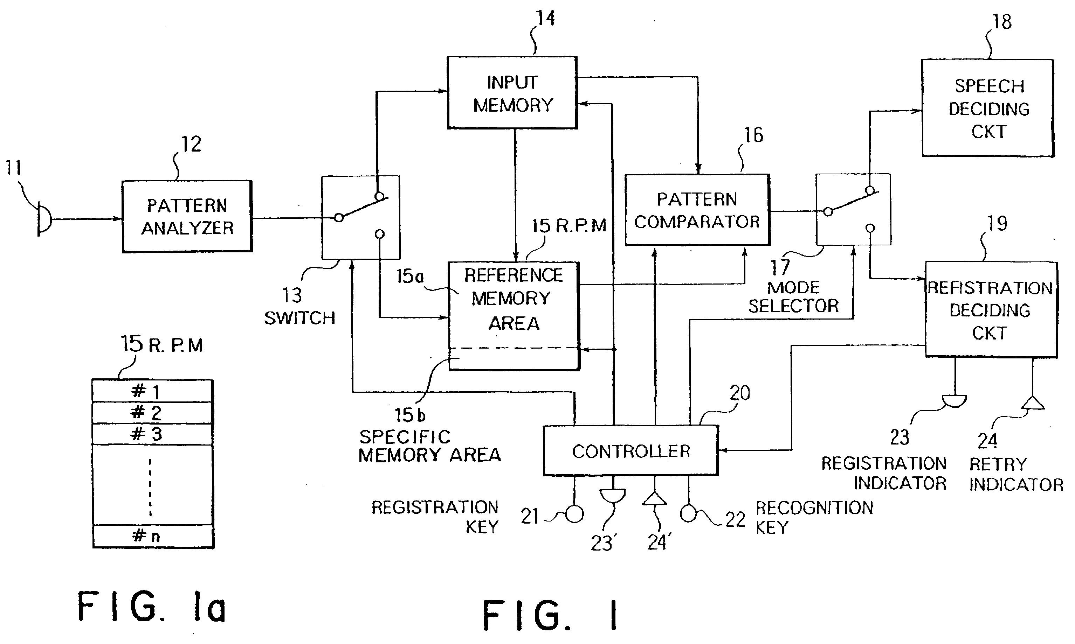

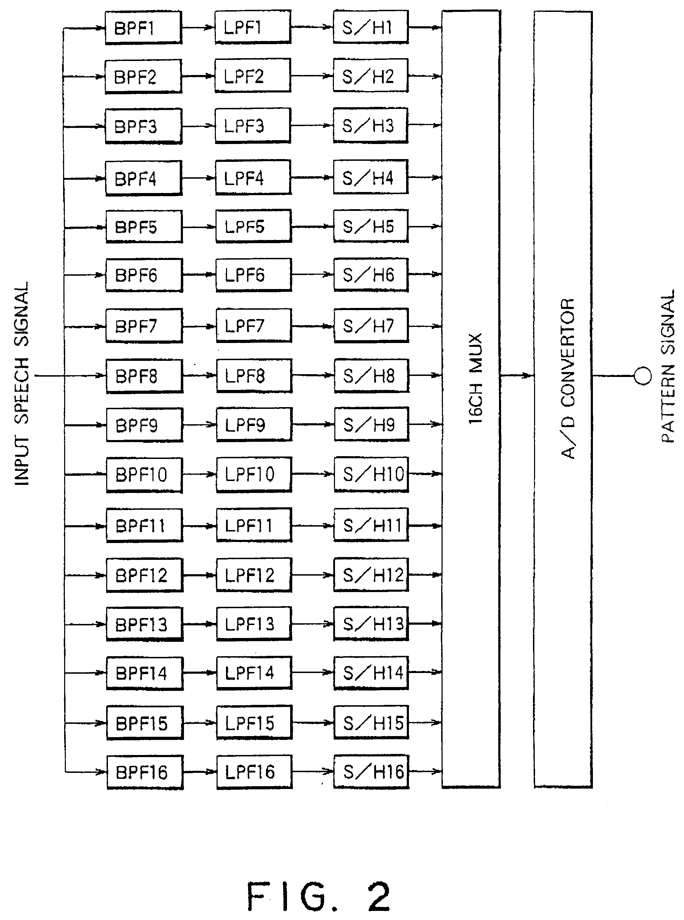

The speech recognition system shown in Fig. 1 has a microphone 11 as an input device for converting an input speech utterance into an input speech signal. The input speech signal is applied to a pattern analyzer 12. The pattern analyzer 12 analyzes the input speech signal to produce an input speech pattern representative of the input speech signal, the frequency spectrum of the input speech signal being analyzed in known manner and converted into a feature vector as the input speech pattern. An example of the pattern analyzer 12 is illustrated in Fig. 2.

The pattern analyzer 12 shown in Fig. 2 comprises a plurality of bandpass filters (sixteen filters shown at BPF1-BPF16) to which the input speech signal is applied, a plurality of lowpass filters (sixteen filters shown at LPF1-LPF16) coupled to the bandpass filters, respectively, a plurality of sample and hold circuits (sixteen circuits shown at S/H1-S/H16) coupled to the lowpass filters, respectively, a multiplexer (16ch MUX) coupled to the sample and hold circuits and an analog-digital convertor (A/D CONVERTOR). The input speech pattern is output by the analog-digital converter. Since this analyzer is well known in the art and since the present invention is not directed to the analyzer, no further description will be given of the analyzer.

The pattern analyzer 12 is coupled to a switch 13 by which it can be selectively connected to an input memory 14 and a reference pattern memory (R.P.M.) 15.

In a recognition mode of the system, the switch 13 is positioned to connect the pattern analyzer 12 with the input memory 14. The input memory 14 then receives the input speech pattern and stores the input speech pattern as a memorized pattern.

The reference pattern memory 15 holds a plurality of reference speech patterns.

A pattern comparator 16 reads the memorized pattern from the input memory 14 and also reads the reference speech patterns from the reference pattern memory 15 one after another. The pattern comparator 16 compares the memorized pattern with each one of the reference speech patterns and produces pattern dissimilarities, which are measures of the dissimilarities between the compared patterns. Since the pattern comparator itself is well known in the art and the present invention is not directed to the pattern comparator, no further description of the pattern comparator will be given here. The pattern comparator 16 may be a pattern comparator using the DP matching method is disclosed in US patent No. 4,882,756. The DP (Dynamic Programing) matching method is a typical one among various known techniques for the pattern comparison.

A mode selector 17 is coupled to the pattern comparator 16 and selectively connects the pattern comparator 16 to one or the other of a speech deciding circuit 18 and a registration deciding circuit 19. During the recognition mode, the mode selector 17 connects the pattern comparator 16 with the speech deciding circuit 18. During the registration mode, the mode selector 17 connects the pattern comparator 16 with the registration deciding circuit 19.

The speech deciding circuit 18 receives the pattern dissimilarities from the pattern comparator 16 through the mode selector 17 and determines which one of the pattern dissimilarities is the smallest, in order to recognize the input speech. The speech decision circuit 18 can be a comparator.

That part of the system shown in Fig. 1 which comprises the microphone 11, the pattern analyzer 12, switch 13, the input memory 14, the reference pattern memory 15, the pattern comparator 16, and the speech deciding circuit 18 constitutes a known speech recognition system. In the known speech recognition system, the input speech is converted into the input speech signal at the microphone 11. The input speech signal is analyzed at the pattern analyzer 12 and converted to the input speech pattern. The input speech pattern signal is applied to the input memory 14 through the switch 13 and stored in the input memory 14 as the memorized pattern. The memorized pattern is compared with each of the reference speech patterns in the reference pattern memory 15 at the pattern comparator 16 and the pattern dissimilarities are produced. The pattern dissimilarities are processed at the speech deciding circuit 18 and the input speech is recognized.

During the registration mode, the switch 13 is positioned to connect the pattern analyzer 12 with the reference pattern memory 15. Thus, the input speech pattern is registered as one of the reference patterns in the reference pattern memory 15. This registration operation has the problem as described in the preamble.

According to the present invention, a spoken word to be registered is uttered twice, so that there is a first spoken word and a second spoken word. The first and the second spoken words are converted into first and second speech signals. The first and second speech signals are analyzed to produce first and second speech patterns. The first and second speech patterns are stored as first and second memorized patterns, in memories, respectively. The first and second memorized patterns are compared to produce a pattern dissimilarity (D) which is a measure of the dissimilarity between them. It is decided whether or not the pattern dissimilarity is larger than a predetermined acceptable maximum dissimilarity (R) which may be referred to as the reject value. When the pattern dissimilarity (D) is not larger than the predetermined acceptable maximum dissimilarity (R), one of the first and the second speech patterns is registered in the reference pattern memory as a reference pattern for the spoken word. On the other hand, when D is larger than R, no registration is carried out and a retry is indicated.

In order to perform the above-described registration steps, the system shown in Fig. 1 further comprises the mode selector 17, the registration deciding circuit 19, and a controller 20.

The controller 20 accommodates a registration key 21 and a recognition key 22 for selecting the registration mode and the recognition mode, respectively.

When the recognition key 22 is operated, the controller 20 controls the switch 13 to connect the pattern analyzer 12 with the input memory 14 and also controls the mode selector 17 to connect the pattern comparator 16 with the speech deciding circuit 18. Then speech recognition is carried out in the known manner as described above.

When the registration key 21 is operated, the controller 20 controls the mode selector 17 to connect the pattern comparator 16 with the registration deciding circuit 19. The controller 20 also controls the switch 13 to connect the pattern analyzer 12 with the reference memory 15 and thereafter, with the input memory 14. As a result, the first and the second speech patterns from the pattern analyzer 12 are applied to and stored in the reference pattern memory 15 and the input memory 14 as the first memorized pattern and the second memorized pattern, respectively.

Referring to Fig. 1a, the reference pattern memory 15 comprises a plurality of locations #l to #n for storing a plurality of reference speech patterns, respectively. The first speech pattern is stored in a particular one of the locations #l to #n under control of the controller 20.

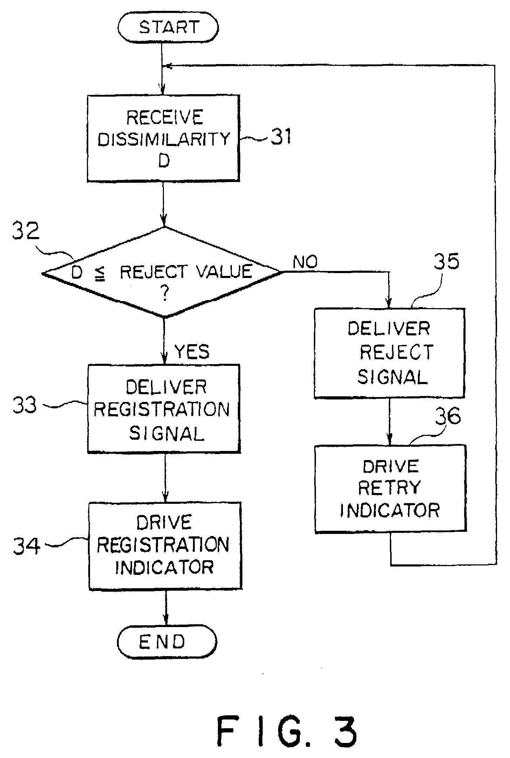

The pattern comparator 16 reads out the first memorized pattern from the particular location in the reference pattern memory 15 under control of the controller 20 and also reads out the second memorized pattern from the input memory 14, and compares the first and the second memorized patterns to produce the pattern dissimilarity (D). The pattern dissimilarity is applied to the registration deciding circuit 19 (step 31 in Fig. 3) and is processed thereat.

The registration deciding circuit 19 is formed of a comparator and has the predetermined acceptable maximum dissimilarity. The registration deciding circuit 19 compares the pattern dissimilarity (D) with the predetermined acceptable maximum dissimilarity (R) as shown at step 32 in Fig. 3. When the former (D) is not larger than the latter (R), the registration deciding circuit 19 delivers a registration signal to the controller 20 (step 33 in Fig. 3) and drives a registration indicator 23, as shown at step 34 in Fig. 3. The controller 20 controls the input memory 14 and the reference pattern memory 15 to store the second memorized pattern from the input memory 14 in the particular location of the reference pattern memory 15 as one of the reference speech patterns. Thus, the registration of the spoken word is completed and the completion is indicated by driving of the registration indicator 23.

When the pattern dissimilarity (D) is larger than the predetermined acceptable maximum dissimilarity (R), the registration deciding circuit 19 delivers a reject signal to the controller 20 (step 35 in Fig. 3) and also drives the retry indicator 24, as shown at step 36 in Fig. 3.

When the controller 20 receives the reject signal from the registration deciding circuit 19, the controller 20 controls the input memory 14 and the reference pattern memory 15 to transfer the second memorized pattern from the input memory 14 to the particular location in the reference pattern memory 15 as the first memorized pattern, and controls the switch 13 to maintain the connection of the pattern analyzer 12 with the input memory 14. Then a single utterance of the word is carried out to produce a retry speech input for the retry. The pattern of the retry speech input is applied to and stored in the input memory 14 as the second memorized pattern.

Thereafter, the registration mode is continued as described until the registration is completed.

In the embodiment shown in Fig. 1 and described hereinbefore, the registration indicator 23 and retry indicator 24 are directly driven by the registration deciding circuit 19. Alternatively, they may be controlled by the controller 20, as shown at 23' and 24'. The controller 20 then drives the registration indicator 23' and the retry indicator 24' in response to the registration signal and the reject signal from the registration deciding circuit 19, respectively.

In a modification, when the controller 20 receives the registration signal from the registration deciding circuit 19, it may be arranged that the controller 20 controls the reference pattern memory 15 to register the first memorized pattern as one of the reference speech patterns. In response to the reject signal, the controller 20 does not access the input memory 14 and the reference pattern memory 15. Instead, the first and the second memorized patterns are maintained in the reference pattern memory 15 and the input memory 14, respectively. Then, the spoken word is uttered twice again to produce first and second speech inputs. The controller 20 controls the switch 13 to connect the pattern analyzer 12 with the reference pattern memory 15 and the input memory 14, alternatingly. Thereafter, the registering operation as described above is again carried out.

In a further modification, the reference pattern memory 15 may comprise a reference memory area 15a for storing a plurality of reference patterns and a specific memory area 15b for storing the first speech pattern applied from the pattern analyzer 12 in the registration mode, as shown in Fig. 1. Then, in the registration mode, the comparator 16 reads the first memorized pattern from the specific memory area 15b under control of the controller 20 to compare it with the second memorized pattern. When the controller 20 receives the registration signal from the registration deciding circuit 19, the controller 20 controls the input memory 14 and the reference pattern memory 15 and stores the second memorized pattern from the input memory 14 in a particular location in the reference memory area 15a as one of the reference patterns. It may also be arranged that the controller 20 controls the reference pattern memory 15 alone and registers the first memorized pattern from the specific memory area 15b in the particular location in the reference memory area 15a.

When the controller 20 receives the reject signal from the registration deciding circuit 19, the controller 20 controls the input memory 14 and the reference pattern memory 15 to transfer the second memorized pattern from the input memory 14 to the specific memory area 15b in the reference pattern memory 15 as the first memorized pattern prior to occurrence of a retry speech input. It may also be arranged so that the second memorized signal is not transferred to the specific area 15b from the input memory 14 but the first memorized signal is maintained as it was in the specific memory area 15b.

## Claims

1. A method of registering a spoken word in a reference pattern memory (15) of a speech recognition system, comprising steps of;
producing (11) a first speech signal for the word;
analyzing (12) said first speech signal to produce a first speech pattern representative of a pattern of said first speech signal;
holding (15) said first speech pattern as a first held pattern;
producing (11) a second speech signal for the same word;
analyzing (12) said second speech signal to produce a second speech pattern representative of a pattern of said second speech signal;
holding (14) said second speech pattern as a second held pattern;
comparing (16) said first and said second held patterns to produce a pattern dissimilarity between said first and said second patterns;
comparing (19) said dissimilarity with a predetermined maximum dissimilarity and (a) storing one of said first and said second speech patterns as a reference speech pattern in said reference pattern memory (15) when said dissimilarity is smaller than said predetermined maximum dissimilarity and
indicating (23) completion of the operation for registration of the spoken word when said dissimilarity is smaller than said predetermined maximum dissimilarity; or
(b) indicating (24) retry of the operation for registration of the spoken word when said dissimilarity is larger than said predetermined maximum dissimilarity.

2. A speech recognition system having means for registering a spoken word in a reference pattern memory means (15) as a reference speech during a registration mode, which comprises;
input means (11) responsive to a speech input for producing an input speech signal representative of said speech input, the input means (11) producing a first and a second speech signal representative of a first spoken word and a second spoken word, respectively, which are repeated attempts to utter the same word during the registration mode;
analyzing means (12) coupled to said input means (11) and responsive to each input speech signal for analyzing the input speech signal to produce an input speech pattern representative of a pattern of the input speech signal, the analyzing means (12) being responsive to said first and second speech signals and analyzing said first and second speech signals to produce first and second speech patterns representative of said first and second speech signals, respectively;
switch means (13) coupled to said analyzing means (12) for connecting the analyzing means (12) to a selected one of an input memory means (14) and said reference pattern memory means (15), the reference pattern memory means (15) being selectively connected to the analyzing means (12) for storing, as a first memorized pattern, one of said first and said second speech patterns which is applied from the analyzing means (12) through the switch means (13) during the registration mode, and the input memory means (14) being selectively connected to said analyzing means for storing, as a second memorized pattern, another of said first and said second speech patterns which is applied from the analyzing means (12) through the switch means (13) during the registration mode;
comparing means (16) coupled to the reference memory means (15) and the input memory means (14) for comparing said first and second memorized patterns with each other to produce a pattern dissimilarity representing dissimilarity between said first and second memorized patterns;
registration deciding means (19) coupled to the comparing means (16) and adapted to compare said pattern dissimilarity with a predetermined maximum dissimilarity and to produce a registration signal for causing storing of one of said first and said second memorized patterns as a reference speech pattern in the reference pattern memory means (15) when said pattern dissimilarity is smaller than said predetermined maximum dissimilarity, said registration deciding means (19) producing a retry signal when said pattern dissimilarity is larger than said predetermined maximum dissimilarity; and
retry indicating means (24) responsive to the retry signal for indicating retry of the operation for registration of the spoken word.

3. A speech recognition system according to claim 2, characterised by control means (20) coupled to said registration deciding means (19) and responsive to said registration signal for controlling at least one of the input memory means (14) and the reference memory means (15) in order to store one of said first and said second memorized patterns as a reference speech pattern in the reference pattern memory means (15).

4. A speech recognition system according to claim 3, characterised by key means (21) coupled to the control means (20) for selecting the registration mode by manual operation thereof, the control means (20) responding to manual operation of the key means (21) by controlling the switch means (13) to connect the analyzing means (12) to the reference pattern memory means (15) and the input memory means (14) alternately so that the first and second speech patterns are stored in the reference pattern memory means (15) and the input pattern memory means (14) as the first and second memorized patterns, respectively.

5. A speech recognition system according to claim 4, characterised in that the reference pattern memory means (15) has a plurality of locations for memorizing a plurality of reference speech patterns, and the control means (20) is such as to cause the reference pattern memory means (15) to store the first speech pattern from the analyzing means (12) in a particular one of said locations in the reference memory means (15) as the first memorized pattern, and to cause the comparing means (16) to read said first memorized pattern from said particular location in the reference pattern memory means (15).

6. A speech recognition system according to claim 5, characterised in that the control means (20) is such as to cause the input memory means (14) and the reference memory means (15) to transfer said second memorized pattern from the input memory means (14) to said particular location in the reference pattern memory means (15) as said reference pattern in response to said registration signal.

7. A speech recognition system according to claim 4, characterised in that the reference pattern memory means (15) comprises a reference memory area (15a) and a specific memory area (15b), and the control means (20) is such as to cause the reference memory means (15) to store said first speech pattern from the analyzing means (12) in the specific memory area (15b) as said first memorized pattern, and to cause the comparing means (16) to read said first memorized pattern from the specific memory area (15b) of the reference pattern memory means (15).

8. A speech recognition system according to claim 7, characterised in that the control means is such as to cause the reference memory means (15) to transfer said first memorized pattern from the specific memory area (15b) to the reference memory area (15a) as a reference pattern in response to said registration signal.

9. A speech recognition system according to claim 7, characterised in that the control means is such as to cause the input memory means (14) and the reference memory means (15) to transfer said second memorized pattern from the input memory means (14) to the reference memory area (15a) in the reference pattern memory means (15) as a reference pattern in response to said registration signal.

10. A speech recognition system according to claim 2, characterised by registration indicating means (23) responsive to said registration signal for indicating completion of registration of a spoken word.

11. A speech recognition system according to claim 2, characterised in that the switch means (13) is constantly fixed to connect the analyzing means (12) to the input memory means (14) during a recognition mode, the input memory means (14) being then adapted to store, as a memorized pattern, said input speech pattern applied from the analyzing means (12) through the switch means (13), the reference pattern memory means (15) holds a plurality of reference speech patterns, the comparing means (16) is adapted to compare said memorized pattern with said reference speech patterns to produce pattern dissimilarities between said memorized pattern and said reference speech patterns, and in that the system further comprises;
mode selecting means (17) connected to the comparing means (16) for connecting the comparing means (16) to the registration deciding means (19) during said registration mode but to a speech deciding means (18) during said recognition mode, the speech deciding means (18) being coupled to the comparing means (16) through the mode selecting means (17) for comparing said pattern dissimilarities with one another to select the smallest pattern dissimilarities, whereby speech input is recognized as the particular one of said reference speech patterns which gives the smallest dissimilarity.

12. A speech recognition system according to claim 11, characterised by first key means (22) for selecting the recognition mode by manual operation thereof, and control means (20) coupled to the first key means (22) and responsive to said manual operation of the first key means (22) to cause the mode selecting means (17) to connect the comparing means (16) to the speech deciding means (18).

13. A speech recognition system according to claim 12, characterised by second key means (21) for selecting the registration mode by manual operation thereof, and the control means (20) being coupled to the second key means (21) and responsive to said manual operation of the second key means (21) to cause the mode selecting means (17) to connect the comparing means (16) to the registration deciding means (19).

## Patentansprüche

1. Verfahren zum Eintragen eines gesprochenen Wortes in einen Vergleichsmusterspeicher (15) eines Spracherkennungssystems, das die Schritte aufweist:
Erzeugen (11) eines ersten Sprachsignals für das Wort;
Analysieren (12) des ersten Sprachsignals, um ein für ein Muster des ersten Sprachsignals repräsentatives erstes Sprachmuster zu erzeugen;
Erfassen (15) des ersten Sprachmusters als ein erstes erfaßtes Muster;
Erzeugen (11) eines zweiten Sprachsignals für das gleiche Wort;
Analysieren (12) des zweiten Sprachsignals, um ein für ein Muster des zweiten Sprachsignals repräsentatives zweites Sprachmuster zu erzeugen;
Erfassen (14) des zweiten Sprachmusters als ein zweites erfaßtes Muster;
Vergleichen (16) des ersten und des zweiten erfaßten Musters, um einen Musterunterschied zwischen dem ersten und dem zweiten Muster zu erzeugen;
Vergleichen (19) des Unterschieds mit einem bestimmten maximalen Unterschied und (a) Speichern eines der ersten und der zweiten Sprachmuster in dem Vergleichsmusterspeicher (15) als ein Vergleichssprachmuster, wenn der Unterschied kleiner als der bestimmte maximale Unterschied ist; und
Anzeigen (23) der Beendigung des Vorgangs für die Eintragung des gesprochenen Wortes, wenn der Unterschied kleiner ist als der bestimmte maximale Unterschied; oder
(b) Anzeigen (24) der Wiederholung des Vorgangs für die Eintragung des gesprochenen Wortes, wenn der Unterschied größer ist als der bestimmte maximale Unterschied.

2. Spracherkennungssystem mit einer Einrichtung zum Eintragen eines gesprochenen Wortes in eine Vergleichsmusterspeichereinrichtung (15) als eine Vergleichssprache während eines Eintragungsbetriebsmodus, das aufweist:
eine auf eine Spracheingabe ansprechende Eingabeeinrichtung (11) zum Erzeugen eines für die Spracheingabe repräsentativen Eingangssprachsignals, wobei die Eingabeeinrichtung (11) ein erstes und ein zweites Sprachsignal erzeugt, die für ein erstes gesprochenes Wort bzw. ein zweites gesprochenes Wort repräsentativ sind, die wiederholte Versuche sind, das gleiche Wort während des Eintragungsbetriebsmodus zu äußern;
eine mit der Eingabeeinrichtung (11) verbundene und auf jedes Eingangssprachsignal ansprechende Analysiereinrichtung (12) zum Analysieren des Eingangssprachsignals, um ein für ein Muster des Eingangssprachsignals repräsentatives Eingangssprachmuster zu erzeugen, wobei die Analysiereinrichtung (12) auf das erste und zweite Sprachsignal anspricht und das erste und zweite Sprachsignal analysiert, um ein erstes und ein zweites Sprachmuster zu erzeugen, die für das erste bzw. das zweite Sprachsignal repräsentativ sind;
eine mit der Analysiereinrichtung (12) verbundene Umschalteinrichtung (13) zum Verbinden der Analysiereinrichtung (12) mit einer ausgewählten Eingangsspeichereinrichtung (14) und der Vergleichsmusterspeichereinrichtung (15), wobei die Vergleichsmusterspeichereinrichtung (15) wahlweise mit der Analysiereinrichtung (12) zum Speichern eines der ersten und der zweiten Sprachmuster als ein erstes gespeichertes Muster, das während des Eintragungsbetriebsmodus von der Analysiereinrichtung (12) durch die Umschalteinrichtung (13) zugeführt wird, verbunden ist, und die Eingangsspeichereinrichtung (14) wahlweise mit der Analysiereinrichtung zum Speichern eines anderen der ersten und der zweiten Sprachmuster als ein zweites gespeichertes Muster, das während des Eintragungsbetriebsmodus von der Analysiereinrichtung (12) durch die Umschalteinrichtung (13) zugeführt wird, verbunden ist;
eine mit der Vergleichsspeichereinrichtung (15) und der Eingangsspeichereinrichtung (14) verbundene Vergleichseinrichtung (16) zum Vergleichen des ersten mit dem zweiten gespeicherten Muster, um einen Musterunterschied zu erzeugen, der den Unterschied zwischen dem ersten und dem zweiten gespeicherten Muster darstellt;
eine mit der Vergleichseinrichtung (16) verbundene Eintragungsentscheidungseinrichtung (19), die dazu angepaßt ist, den Musterunterschied mit einem bestimmten maximalen Unterschied zu vergleichen und ein Eintragungssignal zu erzeugen, was die Speicherung eines der ersten und der zweiten gespeicherten Muster als ein Vergleichssprachmuster in der Vergleichsmusterspeichereinrichtung (15) bewirkt, wenn der Musterunterschied kleiner als der bestimmte maximale Unterschied ist, wobei die Eintragungsentscheidungseinrichtung (19) ein Wiederholungssignal erzeugt, wenn der Musterunterschied größer ist als der bestimmte maximale Unterschied; und
eine auf das Wiederholungssignal ansprechende Wiederholungsanzeigeeinrichtung (24) zum Anzeigen einer Wiederholung des Vorgangs für die Eintragung des gesprochenen Wortes.

3. Spracherkennungssystem nach Anspruch 2, das durch eine mit der Eintragungsentscheidungseinrichtung (19) verbundene und auf das Eintragungssignal ansprechende Steuereinrichtung (20) zum Steuern von mindestens einer der Eingangsspeichereinrichtung (14) und der Vergleichsspeichereinrichtung (15) gekennzeichnet ist, um eines der ersten und der zweiten gespeicherten Muster als ein Vergleichssprachmuster in der Vergleichsmusterspeichereinrichtung (15) zu speichern.

4. Spracherkennungssystem nach Anspruch 3, gekennzeichnet durch eine mit der Steuereinrichtung (20) verbundene Tasteneinrichtung (21) zum Auswählen des Eintragungsbetriebsmodus durch deren Handbedienung, wobei die Steuereinrichtung (20) auf die Handbedienung der Tasteneinrichtung (21) durch Steuern der Umschalteinrichtung (13) anspricht, um die Analysiereinrichtung (12) mit der Vergleichsmusterspeichereinrichtung (15) und der Eingangsspeichereinrichtung (14) abwechselnd zu verbinden, so daß das erste und zweite Sprachmuster in der Vergleichsmusterspeichereinrichtung (15) und der Eingangsmusterspeichereinrichtung (14) jeweils als erstes und zweites gespeichertes Muster gespeichert werden.

5. Spracherkennungssystem nach Anspruch 4, dadurch gekennzeichnet, daß die Vergleichsmusterspeichereinrichtung (15) mehrere Stellen zum Speichern mehrerer Vergleichssprachmuster besitzt und die Steuereinrichtung (20) derart beschaffen ist, daß sie bewirkt, daß die Vergleichsmusterspeichereinrichtung (15) das erste Sprachmuster von der Analysiereinrichtung (12) an einer besonderen der Stellen in der Vergleichsspeichereinrichtung (15) als das erste gespeicherte Muster speichert, und bewirkt, daß die Vergleichseinrichtung (16) das erste gespeicherte Muster an der besonderen Stelle in der Vergleichsmusterspeichereinrichtung (15) liest.

6. Spracherkennungssystem nach Anspruch 5, dadurch gekennzeichnet, daß die Steuereinrichtung (20) derart beschaffen ist, daß sie bewirkt, daß die Eingangsspeichereinrichtung (14) und die Vergleichsspeichereinrichtung (15) als Antwort auf das Eintragungssignal das zweite gespeicherte Muster aus der Eingangsspeichereinrichtung (14) an die besondere Stelle in der Vergleichsmusterspeichereinrichtung (15) als das Vergleichsmuster überträgt.

7. Spracherkennungssystem nach Anspruch 4, dadurch gekennzeichnet, daß die Vergleichsmusterspeichereinrichtung (15) einen Vergleichsspeicherbereich (15a) und einen speziellen Speicherbereich (15b) aufweist und die Steuereinrichtung (20) derart beschaffen ist, daß sie bewirkt, daß die Vergleichsspeichereinrichtung (15) das erste Sprachmuster aus der Analysiereinrichtung (12) als das erste gespeicherte Muster in dem speziellen Speicherbereich (15b) speichert, und bewirkt, daß die Vergleichseinrichtung (16) das erste gespeicherte Muster aus dem speziellen Speicherbereich (15b) der Vergleichsmusterspeichereinrichtung (15) liest.

8. Spracherkennungssystem nach Anspruch 7, dadurch gekennzeichnet, daß die Steuereinrichtung derart beschaffen ist, daß sie bewirkt, daß die Vergleichsspeichereinrichtung (15) als Antwort auf das Eintragungssignal das erste gespeicherte Muster aus dem speziellen Speicherbereich (15b) als ein Vergleichsmuster zu dem Vergleichsspeicherbereich (15a) überträgt.

9. Spracherkennungssystem nach Anspruch 7, dadurch gekennzeichnet, daß die Steuereinrichtung derart beschaffen ist, daß sie bewirkt, daß die Eingangsspeichereinrichtung (14) und die Vergleichsspeichereinrichtung (15) als Antwort auf das Eintragungssignal das zweite gespeicherte Muster aus der Eingangsspeichereinrichtung (14) als ein Vergleichsmuster zu dem Vergleichsspeicherbereich (15a) in der Vergleichsmusterspeichereinrichtung (15) übertragen.

10. Spracherkennungssystem nach Anspruch 2, gekennzeichnet durch eine Eintragungsanzeigeeinrichtung (23), die auf das Eintragungssignal anspricht, um die Beendigung der Eintragung eines gesprochenen Wortes anzuzeigen.

11. Spracherkennungssystem nach Anspruch 2, dadurch gekennzeichnet, daß die Umschalteinrichtung (13) dauerhaft festgelegt ist, um während eines Erkennungsbetriebsmodus die Analysiereinrichtung (12) mit der Eingangsspeichereinrichtung (14) zu verbinden, wobei dann die Eingangsspeichereinrichtung (14) angepaßt ist, als ein gespeichertes Muster das von der Analysiereinrichtung (12) durch die Umschalteinrichtung (13) zugeführte Eingangssprachmuster zu speichern, die Vergleichsmusterspeichereinrichtung (15) mehrere Vergleichssprachmuster erfaßt, die Vergleichseinrichtung (16) angepaßt ist, das gespeicherte Muster mit den Vergleichssprachmustern zu vergleichen, um Musterunterschiede zwischen dem gespeicherten Muster und den Vergleichssprachmustern zu erzeugen, und dadurch, daß das System ferner aufweist:
eine mit der Vergleichseinrichtung (16) verbundene Betriebsmodusauswahleinrichtung (17), um die Vergleichseinrichtung (16) während des Eintragungsbetriebsmodus mit der Eintragungsentscheidungseinrichtung (19), jedoch während des Erkennungsbetriebsmodus mit einer Sprachentscheidungseinrichtung (18) zu verbinden, wobei die Sprachentscheidungseinrichtung (18) durch die Betriebsmodusauswahleinrichtung (17) mit der Vergleichseinrichtung (16) verbunden ist, um die Musterunterschiede miteinander zu vergleichen und die kleinsten Musterunterschiede auszuwählen, wobei eine Spracheingabe als das besondere Vergleichssprachmuster erkannt wird, das den kleinsten Unterschied ergibt.

12. Spracherkennungssystem nach Anspruch 11, gekennzeichnet durch eine erste Tasteneinrichtung (22) zum Auswählen des Erkennungsbetriebsmodus durch deren Handbedienung und eine Steuereinrichtung (20), die mit der ersten Tasteneinrichtung (22) verbunden ist und auf die Handbedienung der ersten Tasteneinrichtung (22) anspricht, um zu bewirken, daß die Betriebsmodusauswahleinrichtung (17) die Vergleichseinrichtung (16) mit der Sprachentscheidungseinrichtung (18) verbindet.

13. Spracherkennungssystem nach Anspruch 12, gekennzeichnet durch eine zweite Tasteneinrichtung (21) zum Auswählen des Eintragungsbetriebsmodus durch deren Handbedienung, und wobei die Steuereinrichtung (20) mit der zweiten Tasteneinrichtung (21) verbunden ist und auf die Handbedienung der zweiten Tasteneinrichtung (21) anspricht, um zu bewirken, daß die Betriebsmodusauswahleinrichtung (17) die Vergleichseinrichtung (16) mit der Eintragungsentscheidungseinrichtung (19) verbindet.

## Revendications

1. Procédé d'enregistrement d'un mot parlé dans une mémoire (15) de structures de référence d'un système de reconnaissance de la parole, comprenant les étapes consistant à :
produire (11) un premier signal vocal du mot ;
analyser (12) ledit premier signal vocal pour produire une première structure vocale représentative d'une structure dudit premier signal vocal ;
conserver (15) ladite première structure vocale comme première structure conservée ;
produire (11) un second signal vocal du même mot ;
analyser (12) ledit second signal vocal pour produire une seconde structure vocale représentative d'une structure dudit second signal vocal ;
conserver (14) ladite seconde structure vocale comme seconde structure conservée ;
comparer (16) ladite première et ladite seconde structures conservées pour produire une dissemblance de structure entre ladite première et ladite seconde structures ;
comparer (19) ladite dissemblance à une dissemblance maximum prédéterminée et (a) mémoriser l'une de ladite première et de ladite seconde structures vocales comme structure vocale de référence dans ladite mémoire (15) de structures de référence lorsque ladite dissemblance est plus faible que ladite dissemblance maximum prédéterminée et
indiquer (23) l'achèvement de l'opération d'enregistrement du mot parlé lorsque ladite dissemblance est plus faible que ladite dissemblance maximum prédéterminée ; ou
(b) indiquer (24) une tentative de relance de l'opération d'enregistrement du mot parlé lorsque ladite dissemblance est plus grande que ladite dissemblance maximum prédéterminée.

2. Système de reconnaissance de la parole ayant des moyens d'enregistrement d'un mot parlé dans un moyen (15) à mémoire de structures de référence comme une parole de référence au cours d'un mode d'enregistrement, qui comprend ;
des moyens d'entrée (11) sensibles à une entrée vocale pour produire un signal vocal d'entrée représentatif de ladite entrée vocale, les moyens d'entrée (11) produisant un premier et un second signaux vocaux représentatifs d'un premier mot parlé et d'un second mot parlé respectivement, qui sont des essais répétés pour prononcer le même mot au cours du mode d'enregistrement ;
des moyens d'analyse (12) couplés aux dits moyens d'entrée (11) et sensibles à chaque signal vocal d'entrée pour analyser le signal vocal d'entrée pour produire une structure vocale d'entrée représentative d'une structure du signal vocal d'entrée, les moyens d'analyse (12) étant sensibles aux dits premier et second signaux vocaux et analysant lesdits premier et second signaux vocaux pour produire des première et seconde structures vocales représentatives desdits premier et second signaux vocaux, respectivement ;
des moyens (13) à commutateur couplés aux dits moyens d'analyse (12) pour connecter les moyens d'analyse (12) à l'un sélectionné d'un moyen (14) à mémoire d'entrée et ledit moyen (15) à mémoire de structures de référence, le moyen (15) à mémoire de structures de référence étant sélectivement connecté aux moyens d'analyse (12) pour mémoriser, comme première structure mémorisée, l'une de ladite première et de ladite seconde structures vocales qui est appliquée à partir des moyens d'analyse (12) par l'intermédiaire des moyens (13) à commutateur au cours du mode d'enregistrement, et le moyen (14) à mémoire d'entrée étant sélectivement connecté aux dits moyens d'analyse pour mémoriser, comme une seconde structure mémorisée, une autre de ladite première et de ladite seconde structures vocales qui est appliquée à partir des moyens d'analyse (12) par l'intermédiaire des moyens (13) à commutateur au cours du mode d'enregistrement ;
des moyens de comparaison (16) couplés au moyen (15) à mémoire de référence et au moyen (14) à mémoire d'entrée pour comparer l'une avec l'autre lesdites première et seconde structures mémorisées pour produire une dissemblance de structure représentant une dissemblance entre lesdites première et seconde structures mémorisées ;
des moyens de décision d'enregistrement (19) couplés aux moyens de comparaison (16) et adaptés pour comparer ladite dissemblance de structure à une dissemblance maximum prédéterminée et pour produire un signal d'enregistrement pour provoquer la mémorisation de l'une de ladite première et de ladite seconde structures mémorisées comme structure vocale de référence dans le moyen (15) à mémoire de structures de référence lorsque ladite dissemblance de structure est plus faible que ladite dissemblance maximum prédéterminée, lesdits moyens de décision d'enregistrement (19) produisant un signal de tentative de relance lorsque ladite dissemblance de structure est plus grande que ladite dissemblance maximum prédéterminée ; et
des moyens d'indication de tentative de relance (24) sensibles au signal de tentative de relance pour indiquer la tentative de relance de l'opération d'enregistrement du mot parlé.

3. Système de reconnaissance de la parole selon la revendication 2, caractérisé par des moyens de commande (20) couplés aux dits moyens de décision d'enregistrement (19) et sensibles audit signal d'enregistrement pour commander au moins l'un du moyen (14) à mémoire d'entrée et du moyen (15) à mémoire de référence de manière à mémoriser l'une de ladite première et de ladite seconde structures mémorisées comme une structure vocale de référence dans le moyen (15) à mémoire de structures de référence.

4. Système de reconnaissance de la parole selon la revendication 3, caractérisé par des moyens (21) à clé couplés aux moyens de commande (20) pour sélectionner le mode d'enregistrement par sa mise en oeuvre manuelle, les moyens de commande (20) étant sensibles à la mise en oeuvre manuelle des moyens (21) à clé en commandant les moyens (13) à commutateur pour connecter les moyens d'analyse (12) au moyen (15) à mémoire de structures de référence et au moyen (14) à mémoire d'entrée alternativement de sorte que les première et seconde structures vocales sont mémorisées dans le moyen (15) à mémoire de structure de référence et le moyen (14) à mémoire de structures d'entrée comme les première et seconde structures mémorisées, respectivement.

5. Système de reconnaissance de la parole selon la revendication 4, caractérisé en ce que le moyen (15) à mémoire de structures de référence possède une pluralité d'emplacements pour mémoriser une pluralité de structures vocales de référence, et les moyens de commande (20) sont tels qu'ils amènent le moyen (15) à mémoire de structures de référence à mémoriser la première structure vocale provenant des moyens d'analyse (12) dans l'un particulier desdits emplacements du moyen (15) à mémoire de référence comme première structure mémorisée, et amènent les moyens de comparaison (16) à lire ladite première structure mémorisée à partir dudit emplacement particulier du moyen (15) à mémoire de structures de référence.

6. Système de reconnaissance de la parole selon la revendication 5, caractérisé en ce que les moyens de commande (20) sont tels qu'ils amènent le moyen (14) à mémoire d'entrée et le moyen (15) à mémoire de référence à transférer ladite seconde structure mémorisée à partir du moyen (14) à mémoire d'entrée au dit emplacement particulier du moyen (15) à mémoire de structures de référence comme ladite structure de référence en réponse au dit signal d'enregistrement.

7. Système de reconnaissance de la parole selon la revendication 4, caractérisé en ce que le moyen (15) à mémoire de structures de référence comprend une aire (15a) de mémoire de référence et une aire (15b) de mémoire spécifique, et les moyens de commande (20) sont tels qu'ils amènent le moyen (15) à mémoire de référence à mémoriser ladite première structure vocale provenant des moyens d'analyse (12) dans l'aire (15b) de mémoire spécifique comme ladite première structure mémorisée, et qu'ils amènent les moyens de comparaison (16) à lire ladite première structure mémorisée provenant de l'aire (15b) de mémoire spécifique du moyen (15) à mémoire de structures de référence.

8. Système de reconnaissance de la parole selon la revendication 7, caractérisé en ce que les moyens de commande sont tels qu'ils amènent le moyen (15) à mémoire de référence à transférer ladite première structure mémorisée de l'aire (15b) de mémoire spécifique à l'aire (15a) de mémoire de référence comme structure de référence en réponse au dit signal d'enregistrement.

9. Système de reconnaissance de la parole selon la revendication 7, caractérisé en ce que les moyens de commande sont tels qu'ils amènent le moyen (14) à mémoire d'entrée et le moyen (15) de mémoire de référence à transférer ladite seconde structure mémorisée du moyen (14) à mémoire d'entrée à l'aire (15a) de mémoire de référence dans le moyen (15) à mémoire de structures de référence comme structure de référence en réponse au dit signal d'enregistrement.

10. Système de reconnaissance de la parole selon la revendication 2, caractérisé par des moyens d'indication d'enregistrement (23) sensibles au dit signal d'enregistrement pour indiquer l'achèvement de l'enregistrement d'un mot parlé.

11. Système de reconnaissance de la parole selon la revendication 2, caractérisé en ce que les moyens (13) à commutateur sont constamment fixés pour connecter les moyens d'analyse (12) au moyen (14) à mémoire d'entrée au cours d'un mode de reconnaissance, le moyen (14) à mémoire d'entrée étant alors adapté pour mémoriser, comme une structuré mémorisée, ladite structure vocale d'entrée appliquée à partir des moyens d'analyse (12) par l'intermédiaire des moyens (13) à commutateur, le moyen (15) à mémoire de structures de référence conserve une pluralité de structures vocales de référence, les moyens de comparaison (16) sont adaptés pour comparer ladite structure mémorisée aux dites structures vocales de référence pour produire des dissemblances de structure entre ladite structure mémorisée et lesdites structures vocales de référence, et en ce que le système comprend en outre ;
des moyens de sélection de mode (17) connectés aux moyens de comparaison (16) pour connecter les moyens de comparaison (16) aux moyens de décision d'enregistrement (19) au cours dudit mode d'enregistrement mais à un moyen de décision vocale (18) au cours dudit mode de reconnaissance, le moyen de décision vocale (18) étant couplé aux moyens de comparaison (16) par l'intermédiaire de moyens de sélection de mode (17) pour comparer l'une avec l'autre lesdites dissemblances de structure afin de sélectionner les plus faibles dissemblances de structure, si bien que l'entrée vocale est reconnue comme étant celle particulière desdites structures vocales de référence qui donnent la dissemblance la plus faible.

12. Système de reconnaissance de la parole selon la revendication 11, caractérisé par des premiers moyens (22) à clé pour sélectionner le mode de reconnaissance par sa mise en oeuvre manuelle, et des moyens de commande (20) couplés aux premiers moyens (22) à clé et sensibles à ladite mise en oeuvre manuelle des premiers moyens (22) à clé pour amener les moyens de sélection de mode (17) à connecter les moyens de comparaison (16) au moyen de décision vocale (18).

13. Système de reconnaissance de la parole selon la revendication 12, caractérisé par des seconds moyens (21) à clé pour sélectionner le mode d'enregistrement par sa mise en oeuvre manuelle, et les moyens de commande (20) étant couplés aux seconds moyens (21) à clé et sensibles à ladite mise en oeuvre manuelle des seconds moyens (21) à clé pour amener les moyens de sélection de mode (17) à connecter les moyens de comparaison (16) aux moyens de décision d'enregistrement (19).
